(19)

**Europäisches Patentamt**

**European Patent Office**

**Office européen des brevets**

(11) **EP 4 386 356 A1**

(12) **EUROPEAN PATENT APPLICATION**

(43) Date of publication:
**19.06.2024 Bulletin 2024/25**

(21) Application number: **22213752.3**

(22) Date of filing: **15.12.2022**

(51) International Patent Classification (IPC):
**G01N 15/02** $^{(2024.01)}$  **G01N 15/04** $^{(2006.01)}$

(52) Cooperative Patent Classification (CPC):
**G01N 15/0205; G01N 15/042;** G01N 2015/047

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **VITO NV**
**2400 Mol (BE)**

(72) Inventors:
- **NELISSEN, Inge**
  **2400 Mol (BE)**
- **JACOBS, An**
  **2400 Mol (BE)**
- **SZYMONIK, Michal**
  **2400 Mol (BE)**

(74) Representative: **AWA Benelux**
**AWA Benelux SA**
**Tour & Taxis - Royal Depot box:216**
**Havenlaan 86c Avenue du Port**
**1000 Bruxelles (BE)**

(54) **METHOD AND APPARATUS FOR FLUORESCENT PARTICLE CHARACTERIZATION**

(57)     A method and an apparatus for characterizing a sample of particles are configured to inject the sample in a liquid contained in an internal chamber (25) of a disk (21) rotating about an axis (200) of rotation, to subject the particles of the sample to centrifugal separation in the liquid in the internal chamber, to illuminate the particles of the sample at a first radial position (253) with respect to the axis of rotation with a first light wavelength and to collect, in response to illuminating with the first light wavelength, first data representative of light scattering and/or light absorbance, as a function of time, to illuminate the particles of the sample at a second radial position (254) with respect to the axis of rotation with a second light wavelength thereby inducing fluorescence emission of at least a portion of the particles and to collect fluorescence data representative of the induced fluorescence emission, as a function of time, and to determine a measurement representative of a property of the particles based on the first data and the fluorescence data.

FIG 1A

**EP 4 386 356 A1**

**Description**

**Technical field**

The present invention is related to systems and methods for analyzing particle suspensions, in particular via differential centrifugal sedimentation.

**Background art**

Differential centrifugal sedimentation (DCS) or Disk-centrifugal liquid sedimentation (CLS) is an analysis technique utilizing a disk centrifuge. Rather than a traditional centrifuge rotor, a disk centrifuge comprises two transparent plates with a hollow compartment (disk cavity) between them, and a solid rim. The disk is rotated at high speed and a liquid injected into the hollow compartment to generate a density gradient - a typical gradient medium is a solution of gradually varying sucrose concentration in water but various other solvents and density media can be used.

A sample of interest may then be injected into the hollow compartment in proximity of the center of the disk. The sample will reach the top of the density gradient medium. Any components in the sample which are more dense than the density gradient medium, such as particles in suspension, will then begin to travel through the density gradient medium towards the radial edge of the disk due to the centrifugal forces they experience. The magnitude of the force, and therefore the speed at which a sample particle travels through the density gradient medium, is dependent on the size and density of the particle. The use of a density gradient medium inside the disk cavity is necessary to prevent the "streaming" of sample to the radial edge of the disk. In the typical configuration, an optical detector is positioned near the rim of the disk. The optical detector typically consists of a light source and a detector mounted on either side of the disk, with the light path parallel to the disk axis. Any light absorbed or scattered by components of the sample passing in front of the detector is measured as a decrease in the light intensity reaching the detector.

The time that is necessary to migrate to the detector is utilized to calculate the hydrodynamic size of the particle, employing a modified form of the Stokes' law, according to the equation:

$$D = \{ (18\eta \ln(Rf/R0)) / ((\rho\rho - \rho f) \omega 2t) \} 0.5 \qquad \text{(Eq. I),}$$

wherein D is the particle diameter (cm), $\eta$ is fluid viscosity (poise), Rf is final radius of rotation (cm), R0 is the initial radius of rotation (cm), $\rho\rho$ is the particle density (g/mL), $\rho f$ is the fluid density (g/mL), $\omega$ is the rotational velocity (radians/sec) and t is the time required to sediment from R0 to Rf (sec). The intensity of the detected signal is a measure for determining the concentration. As a result, a particle size distribution of a sample can be measured.

The disk centrifuge has several advantages over alternative analytical centrifuge configurations using sample cells or cuvettes mounted in a rotor assembly:

- the gradient is effectively self-balancing, no laborious balancing of samples is required;
- multiple samples can be analyzed on the same density gradient medium by sequential injection without the need for any cleaning or stopping and restarting the device;
- preparation of the device for use is quick and easy;
- the sample sediments in the disk as a continuous ring;
- the optical signal may be continuously integrated over an extended period of time. In contrast, in a cuvette analytical centrifuge, the optical signal must be sampled during a fraction of each rotation, while the sample cuvette is passing through the detector optical path. This demands precise synchronization and short signal integration times, which is not required in the disk centrifuge.

Measuring by Differential Centrifugal Sedimentation (DCS) has several advantages over alternative analytical methods used to obtain similar information about suspensions of particles. A first advantage is that no significant purification is required before carrying out the measurement. Therefore, DCS is more time and cost efficient with respect to methods known in the art, such as Nanoparticle Tracking Analysis (NTA) and flow cytometry. Additionally, the reduction in purification steps enables an increase in effective sensitivity since sample loss inevitably occurs during purification steps. DCS further requires very few consumables, especially since the disk can be reused, which further adds to the DCS being cost efficient. Finally, the disk can be operated continuously over the period of many hours, allowing sequential analysis.

Still, the use of DCS in the analysis of complex biological samples has one major disadvantage in that it provides in its current configuration only a size distribution of the materials present, but lacks the possibilities of differentiating between materials which are biochemically distinct but have similar physical properties (particle size and density).

US 7294513 B2 describes technology for implementation of multi-angle scattering detection inside several centrifuge configurations, including a disk centrifuge. Sample properties are measured via multi-angle light scattering. This includes reference to a laser light source and detectors located at variable angles in relation to the plane of the disk. Additional scattering detectors are utilized in order to enable the application of multi-angle light scattering approaches with the aim of enabling a more accurate determination of the absolute particle size, while removing the need for external reference standards. Certain other experimental errors and sources of noise can be excluded, again improving the absolute size determination accuracy. US 7294513 B2 further discloses a possibility to detect fluorescence as inelastically scattered light by selecting appropriate detector filters.

**Summary**

There is accordingly a need to have an improved DCS measurement method and apparatus enabling not only to determine size distribution, but also to differentiate between such biochemically distinct but physically similar materials in a sample, without losing the aforementioned benefits related to DCS.

It is an aim of the present disclosure to determine the (bio)molecular signatures associated with components of the sample, even if those components may not differ in size/density. It is an aim to provide a rapid, one-step method for the analysis of both the size distribution and the (bio)chemical identity of (biological) nanoparticles from purified samples and from crude mixtures of complex (bio)fluids.

According to the present disclosure, there is therefore provided a method of characterizing a sample of particles, as set out in the appended claims. A method according to the present disclosure comprises injecting the sample in a liquid contained in an internal chamber of a disk rotating about an axis of rotation, and subjecting the particles of the sample to centrifugal separation in the liquid in the internal chamber.

The particles can be organic and/or inorganic. Advantageously, the sample comprises biological particles. The particles of the sample can have a (volumetric) size distribution with a 10-percentile diameter of at least 10 nm (i.e., 90% of the particles having a size of at least 10 nm), advantageously at least 20 nm. The particles of the sample can have a (volumetric) size distribution with a 90-percentile diameter of 40 $\mu$m or less (i.e., 90% of the particles having a diameter 40 $\mu$m or less), advantageously 30 $\mu$m or less, advantageously 20 $\mu$m or less, advantageously 10 $\mu$m or less. Volumetric particle size distributions can be determined by laser diffraction techniques. The sample can be a colloidal suspension of the particles.

Advantageously, the sample is illuminated at a first radial position with respect to the axis of rotation with a first light wavelength. In response to illuminating with the first light wavelength, first data representative of light scattering and/or light absorbance is detected, as a function of time.

The sample is illuminated at a second radial position with respect to the axis of rotation with a second light wavelength. The second light wavelength is configured to induce fluorescence emission of at least a portion of the particles and collecting emitted fluorescence data representative of the induced fluorescence emission, as a function of time. A measurement representative of at least one property of the sample of particles based on the fluorescence data and advantageously based on the first data is determined. The fluorescence data is advantageously processed to correlate to a size information of the particles. In some examples, the at least one property can relate to information regarding size, concentration and/or mass, relating to various kinds of particles comprised in the sample, and/or to composition of the sample.

One advantage of the above method is that it renders possible to obtain (bio)chemical signatures associated with particles in a sample along with size information of the sample in a rapid, single step method. This is rendered possible by applying fluorescence measurement to a disk centrifuge apparatus provided with a gradient density medium in which the particles are made to separate by centrifugal forces. Prior fractionation and/or purification of the sample is advantageously not required in methods of the present disclosure, contrary to prior art (bio)molecular characterization methods. Furthermore, methods of the present disclosure are more tolerant to contaminants in the sample. As a result, a faster and more economical analysis method is obtained. Advantageously, the size information is obtained from the fluorescence data. In some examples, by utilizing size information from the first (scattering and/or absorbance) data, a more complete information on a sample can be obtained, especially when not all particles of the sample cause fluorescent emission. It becomes hence possible to distinguish physically similar, but (bio)chemically distinct particles within a sample easily. It was further observed that the first data (scattering and/or absorbance) shows a tendency for variable and unstable signal baselines, which can interfere particularly with analysis of highly dilute samples over extended measurement time frames. Fluorescence-based detection according to the present disclosure overcomes this limitation and therefore allows to reliably analyze such samples.

Advantageously, the sample is illuminated with the second light wavelength through a light beam entering the internal chamber from a first face of the disk. The fluorescence data is collected via a fluorescence emission detected at a same side of the first face. The inventors have observed that such a detection provides improved measurement signal compared to solutions where fluorescence emission is collected at a side of the disk opposite the first face. The latter setup generated a significant background noise signal, which is thought to be due to contaminants present in the disk material at either one or both faces.

Advantageously, the fluorescence data is collected via the fluorescence emission intercepted by an optical assembly having an optical axis arranged oblique or perpendicular relative to a plane perpendicular to the axis of rotation. Advantageously, the optical axis has an angle relative to the plane perpendicular to the axis of rotation between 45° and 90°. By aligning the optical axis as indicated, it was observed that undesired (background) fluorescence emission signals, e.g. emitted from the disk material or contaminants embedded in the disk walls appeared spatially distinct on images of the collected data allowing these undesired signals to be easily excluded from the measurement data (captured image) by appropriate placement of a selection window to select a measurement region of interest.

Advantageously, an optical beam comprising the second light wavelength is focused at a location inside the internal chamber. This maximizes spatial resolution compared to when the optical beam is focused on the disk face.

Advantageously, at least a portion of the particles is labelled by a fluorescent marker or a dye, which may react with the particle to produce a fluorescent product. By doing so, complex suspensions, particularly containing various combinations of biological particles can be easily analysed.

According to another aspect of the present disclosure, there is provided an apparatus for characterizing a sample of particles, as set out in the appended claims. An apparatus according to the present disclosure comprises a disk rotatable about an axis of rotation, the disk comprising an internal chamber configured to contain a liquid, a transparent window on at least one face, and possibly both faces, of the disk and an injection site for injecting the sample of particles into the liquid, such that the sample of particles is configured to separate via centrifugal separation in the liquid.

The apparatus advantageously comprises a first light source configured to illuminate the sample with a first light wavelength at a first radial position with respect to the axis of rotation and a corresponding first detector configured to collect first data representative of light scattering and/or light absorbance in response to the sample being illuminated with the first light wavelength.

The apparatus comprises a second light source configured to illuminate the sample with a second light wavelength at a second radial position with respect to the axis of rotation, and a corresponding second detector configured to collect second data representative of fluorescence induced in the sample in response to the sample being illuminated with the second light wavelength.

A processing unit is coupled to the second detector and optionally the first detector. The processing unit is configured to determine a measurement representative of a property of the sample of particles based on the second data, and optionally on the first data.

The above method and apparatus hence combine a differential centrifugal separation device with a fluorescence spectroscopy unit. This advantageously allows a rapid one-step characterization of complex suspensions of particles, both physically and (bio)chemically. Furthermore, by advantageously combining the first data and the second data, a more complete information on a sample can be obtained, especially when not all particles of the sample cause fluorescent emission.

Advantageously, the beam producing the second light wavelength is configured to illuminate the sample in the internal chamber from a same side or face of the disk as the side of the disk at which the fluorescence emission beam is detected. In some examples, the second light source and the second detector are arranged at a same side of the disk. The inventors have observed that such a setup allowed to obtain optimal signal to noise ratios compared to alternative setups, e.g. in which the second light source and the second detector are arranged at opposite sides of the disk, which was found to generate a significant background noise signal, resulting in degraded performance.

Advantageously, the fluorescence emission is captured or detected at an optical axis which is oblique to a plane perpendicular to the axis of rotation. Advantageously, optical assemblies of the second light source configured to illuminate the particles of the sample and of the second detector configured to intercept the fluorescence emission are arranged at a same side of the disk. This allows fluorescence emitted from the disk faces to be easily excluded via selection of the appropriate region of interest in the captured image. Advantageously, the processing unit comprises a graphical user interface, such as a visual display, configured to visualize a spatially resolved image of the second data and to apply a selection window to the spatially resolved image of the second data. Second data outside the selection window is advantageously not utilized (discarded) to determine the measurement.

Advantageously, the second light source comprises a focusing optics configured to focus the beam comprising the second light wavelength at a location inside the internal chamber. This maximizes spatial resolution compared to confocal beam optics, where the beam is focused on the disk face.

According to yet another aspect of the present disclosure, an apparatus for characterizing a sample of particles comprises a disk rotatable about an axis of rotation, the disk comprising an internal chamber configured to contain a liquid, a transparent window on at least one face of the disk and an injection site for injecting the sample of particles into the liquid, such that the sample of particles is configured to separate via centrifugal separation in the liquid. Particularly, the liquid comprises a density gradient medium. The apparatus comprises a light source configured to illuminate the sample with a light wavelength at a predetermined radial position with respect to the axis of rotation, and a corresponding detector configured to collect data representative of fluorescence emission induced in at least a portion of the particles of the sample in response to the particles of the sample being illuminated with the light wavelength. Advantageously, a beam comprising the light wavelength is configured to illuminate the sample in the internal chamber from a same side or face of the disk as the side of the disk at which the fluorescence emission beam is detected. In some examples, the light source and the detector are arranged at a same side of the disk. Advantageously, the detector comprises an optical axis configured to capture the fluorescence emission, which optical axis is oblique to a plane perpendicular to the axis of rotation, or perpendicular thereto.

**Brief description of the figures**

Aspects of the invention will now be described in more detail with reference to the appended drawings, wherein same reference numerals illustrate same features and wherein:

Figure 1A represents a diagram of the top view of a disk centrifuge apparatus according to the present disclosure;
Figure 1B represents a front view of the disk centrifuge apparatus of Fig. 1A seen from the side of the fluorescence spectroscopy assembly;
Figure 2 represents a diagram of an alternative disk centrifuge apparatus according to the present disclosure;
Figure 3 represents a flow diagram of a method according to the present disclosure;
Figure 4 represents a graph of scattering data obtained in Example 1;
Figure 5 represents a graph of the scattering data of Fig. 4 superimposed with fluorescence data obtained with three detection channels at 488 nm, 561 nm and 637 nm wavelengths obtained on the same sample as Fig. 4;
Figure 6 represents a graph of scattering and fluorescence data obtained for a CellMask™ Orange (CMO; ThermoFisher Scientific) stained sample in Example 2;
Figure 7 represents a graph of scattering and fluorescence data obtained for a 5-(and-6)-Carboxyfluorescein Diacetate Succinimidyl Ester (CFDA-SE; ThermoFisher Scientific) stained sample in Example 2;

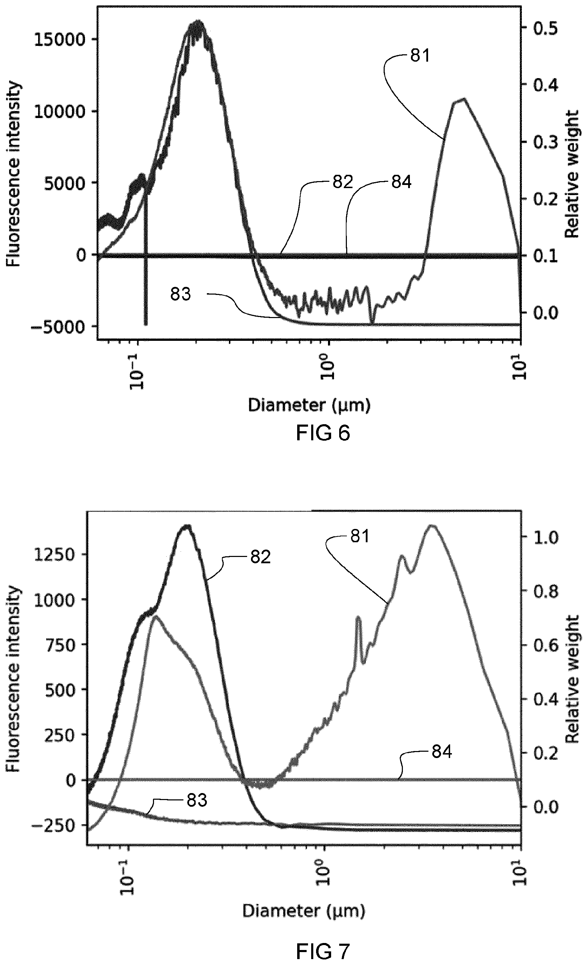

Legend for Fig. 6 and Fig. 7: 81 - scattering signal; 82 - fluorescence signal at 488 nm; 83 - fluorescence signal at 561 nm; 84 - fluorescence signal at 637 nm.

Detailed Description

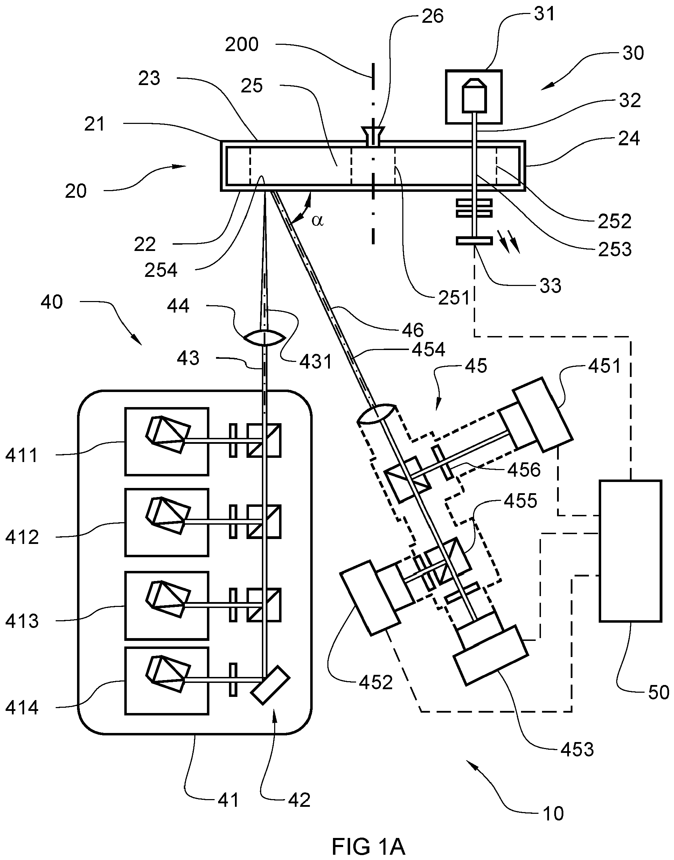

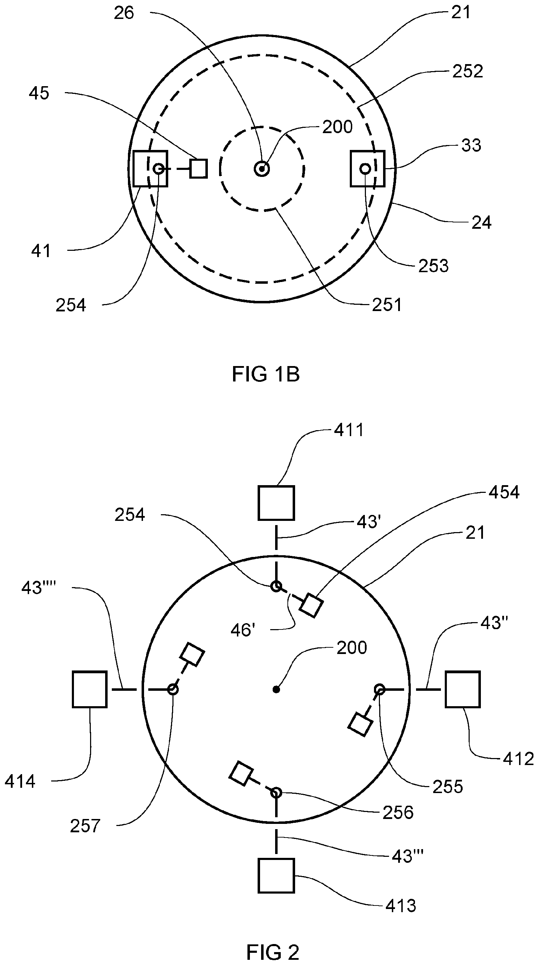

Referring to Figs. 1A-1B, an apparatus 10 according to aspects of the present disclosure comprises a disk centrifuge part 20, advantageously a light scattering measurement part 30 and advantageously a fluorescence spectroscopy part 40. The disk centrifuge part 20 and the light scattering measurement part 30 are advantageously configured to perform differential centrifugal sedimentation as known in the art.

Disk centrifuge part 20 comprises a disk 21 which is rotatable about an axis 200 of the disk. Axis 200 can be arranged vertically or advantageously horizontally. A horizontally arranged axis 200 advantageously eases alignment and calibration procedures for the optical parts of the apparatus. Disk 21 comprises a chamber 25 defined by a front disk plate 22 and back disk plate 23 spaced apart from one another along the axis 200. An edge wall 24 arranged circumferentially about the front and back disk plates closes the chamber 25 at a radial end. The front disk plate 22 and possibly back disk plate 23 are at least partially transparent to allow light to pass from the outside into the chamber 25 and vice versa. Chamber 25 is configured to receive a density gradient medium, as known in the art, e.g. a solution of gradually varying sucrose concentration. The density gradient medium can be arranged in the chamber 25, between a first radial position 251 closer to the axis 200 and a second radial position 252 further from the axis 200 and closer to edge wall 24. Disk 21 can further comprise an injection site 26 for injecting a sample of particles to be investigated into the chamber 25, and possibly the density gradient medium. The injection site 26 is advantageously located at a radial position of the disk 21, possibly between axis 200 and the first radial position 251 of the density gradient medium, typically at the axis 200.

The apparatus 10 advantageously comprises a light scattering measurement part 30. The light scattering measurement part 30 comprises a system configured to detect data representative of size of a sample of particles travelling along the density gradient medium in chamber 25. A light source 31, particularly configured to emit a coherent light beam 32, such as a photodiode, or laser light, is arranged so as to direct the light beam 32 axially through the disk 21 (and into the chamber 25) at an advantageously fixed or predetermined radial position 253, such as between the first and second radial positions 251 and 252. A photodetector assembly 33, which can be arranged at an opposite side of the disk 21 compared to light source 31, or at a same side, is configured to detect portions of the emitted light beam 32. Photodetector assembly 33 can be configured to detect light which is scattered from light beam 32 by a sample of particles. Alternatively, or in addition, photodetector assembly 33 can be arranged to detect a light intensity of the light beam 32 after passing through the chamber 25. By so doing, light absorbance can be detected. Photodetector assembly 33 is coupled to a processing unit 50 configured to read an output of photodetector and perform appropriate signal processing to obtain a measurement. The above system components advantageously allow to perform measurements by differential centrifugal sedimentation (DCS).

According to an aspect of the present disclosure, a fluorescence spectroscopy part 40 is provided in co-operation with the disk centrifuge part 20. This part is configured to expose the sample to incident light, and to detect fluorescent emission from fluorescent material present in the sample. The fluorescent spectroscopy part 40 comprises a light source 41, advantageously a laser light source. The light source can alternatively be a light-emitting diode or a broad-spectrum light source, such as a mercury, tungsten and/or xenon light source, coupled with the appropriate power supply. Light source 41 advantageously is a multi-wavelength light source, possibly configured to emit in a plurality of contiguous spectral bands, e.g. a hyperspectral light source. In some examples, light source 41 comprises a plurality of (laser) light source modules 411-414, each being configured to emit a coherent beam of a different wavelength. The light beams emitted by light source modules 411-414 are advantageously combined via an appropriate optical assembly 42 into a combined collimated beam 43. Light source 41 is advantageously configured to emit at one or more wavelengths which excite a fluorescent material comprised in the sample, causing fluorescent emission from the material. In some examples, light source 41 (light source modules 411-414) can be configured to emit at one or more of a wavelength of 405 nm (e.g., 395 - 420 nm), 488 nm (e.g., 450 - 520 nm), 561 nm (e.g., 550 - 580 nm) and/or 638 nm (e.g., 610 - 660 nm).

A focusing optic assembly 44, e.g. comprising a focusing lens, is advantageously arranged in the optical path of beam 43. Focusing optic assembly 44 is advantageously configured to have a focus within chamber 25, i.e. configured to focus collimated beam 43 onto a position inside chamber 25, particularly at a radial position 254, which can be located between the first position 251 and the second position 252. Radial positions 253 and 254 can be at a same distance from the axis 200, although they may be arranged at distinct angular orientations about the axis 200. Alternatively radial positions 253 and 254 can be distinct. Focusing collimated beam 43 to a position inside chamber 25, rather than on the disk plate 22 advantageously maximizes the spatial resolution of fluorescent detection, leading to improved measurement resolution. It also advantageously maximizes the excitation light power density in the sample relative to the out-of-focus light incident on the disk plate material. Alternatively, the light source and/or the focusing optic system can be confocal with the front disk plate 22.

A detector assembly 45 is configured to capture light emitted by fluorescent species present in the sample. As the fluorescent species are excited by light beam 43 in the chamber 25, a fluorescent light beam 46 is obtained in response. Detector assembly 45 can for example comprise a hyperspectral detector configured to detect a broad range of possibly contiguous wavelengths (or spectral bands) or a plurality of photodetector modules 451-453, each being configured to detect incident light of a particular wavelength. These wavelengths typically depend on the wavelengths being emitted by light sources 411-414. By way of example, light sources 411-414 can be configured to emit respectively at 405 nm, 488 nm, 561 nm and 638 nm wavelengths. The photodetector modules 451-453 can be configured to detect wavelengths respectively at 500-550 nm, 580-630 nm, and wavelengths exceeding 660 nm. Depending on the nature of the fluorescence to be detected, more or less photodetector modules 451-453 can be provided compared to the number of light source modules 411-414.

Advantageously, detector assembly 45 can comprise one or more beam splitters 455 configured to split the emitted (fluorescent) light beam 46 towards the plurality of photodetector modules 451-453. Suitable optical filters 456 in the detector assembly 45 can be configured to appropriately filter the fluorescent light beam 46 to obtain different wavelength portions appropriate for the respective photodetector modules. Photodetector modules 451-453 are coupled to processing unit 50 which is configured to read out the outputs from the photodetector modules and perform appropriate signal processing.

Advantageously, the detector assembly 45 is arranged such that it has an optical axis 454 (e.g., an axis of beam 46) which is oblique to the disk plate 22, such as oblique to a plane perpendicular to the axis 200. Optical axis 454 is arranged at an angle $\alpha$ with the front disk plate 22 (or with a plane perpendicular to the axis 200) advantageously between about 5° and less than 90° (e.g., 89° or 87°); advantageously between about 30° and less than 90°; particularly between about 45° and less than 90°. Such a setup advantageously allows for the exclusion of background fluorescent signal, which may arise from excitation of fluorescent material in the disk material itself, or of contaminants embedded in the disk walls. The incident beam 43 of light source 41 is advantageously oriented parallel to axis 200 into the chamber 25, i.e. the light source 41 / focusing optic assembly 44 advantageously has an optical axis 431 parallel to axis 200.

In some examples, the light source and the detector assembly are arranged in an epifluorescence configuration in which $\alpha$ is 90° and the excitation light beam 43 and the emitted light beam 46 share the same focusing optics, possibly including an appropriate beam splitter, such as a dichroic mirror. A confocal configuration can additionally or alternatively be used, where a diaphragm is arranged in the light path which enables to attenuate signal contributions from outside the focal plane of the optics, possibly further reducing stray background signals.

The photodetector modules 451-453 can comprise a spatially resolved image sensor, such as a sCMOS (scientific Complementary Metal Oxide Semiconductor) camera, as the optical detector. This facilitates alignment of the optical assembly and allows for easy identification of the image region which corresponds to light emitted from within the disk chamber 25, in contrast to contributions from the disk material. A selection of an appropriate region of interest for analysis can be performed via camera firmware or analysis software, or alternatively via appropriate positioning of a non-spatially resolved detector, i.e. a diaphragm in the optical path.

The light source modules 411-414 can be temporally modulated to allow sequential acquisition of a signal on separate detector channels of detector assembly 45. The light source modules 411-414 can alternatively be fired simultaneously to improve time resolution of the recorded signal, possibly at the cost of increased crosstalk between the detection channels.

As the fluorescence spectroscopy part 40 is measuring fluorescence at a defined radial position from axis 200, the fluorescence signal can be correlated to the size of the particles in the sample, by tracking the signal detected by detector assembly 45 as a function of time. This can be provided for either in the detector assembly 45, or in the processing unit 50.

Referring to Fig. 2, instead of having one collimated multi-wavelength beam 43, it is possible to position the light source modules 411-414 and/or arrange the optical assembly 42 such that the respective beams 43'-43'''' emitted from light source modules 411-414 are configured to be incident on the disk (sample) at different angular positions 254-257 about axis 200 while advantageously being incident on the disk (sample) at radially equidistant positions from axis 200. In some examples, the light source modules 411-414 are arranged at different angular positions about axis 200 yet possibly at radially equidistant positions. A separate photodetector module 454 can be associated to each of the light source modules 411-414 and configured to detect a fluorescence beam 46' in a wavelength range associated with a wavelength emitted by the respective light source module.

Referring again to Figs. 1A-1B, the detector assembly 45 (and related photodetector modules 451-454) is advantageously arranged at a same side of the disk 21 compared to light source 41 (light source modules 411-414). This leads to a high signal to noise ratio since the excitation light from beam 43 is typically transmitted through the chamber 25 / disk 21 and the detected beam 46 may only comprise some reflected excitation light along with fluorescence light. It is alternatively possible to position the light source 41 and the detector assembly 45 at opposite sides of the disk, along axis 200, albeit this may deteriorate the signal to noise ratio and/or deteriorate the intensity of the fluorescence that can be detected.

The processing unit 50 can be configured (via hardware and/or software) to extract a fluorescence intensity signal from the data captured by the detector assembly 45 and/or to extract a size distribution signal from the data captured by the photodetector assembly 33. The processing unit can be implemented with a method to process the signal inputs (via hardware and/or software). From the image data captured by any one of the detector assemblies, a (linear) spatial profile can be selected by the user. The processing unit will be configured to measure the signal across this profile. This advantageously allows for the identification of the area of the image corresponding to a signal emitted from inside the disk chamber and exclude signals originating from the disk walls. The signal along the linear profile is processed to determine an intensity profile across the user-defined linear profile. This intensity profile can undergo averaging, smoothing and/or baseline subtraction. A raw maximum intensity is extracted from the processed signal. The raw maximum intensity can be processed based on the detector configuration to determine an intensity value which is advantageously independent from the detector configuration. This value can be recorded as the final fluorescence signal for a particular detection channel.

The processing unit 50 is advantageously configured to determine both a fluorescence signal from measurements of the detector assembly 45 and a signal representative of size and/or density distribution from measurements of the photodetector assembly 33. Since these signals relate to a same sample, combined information on the sample can be extracted. In some examples, the processing unit 50 is configured to superimpose the fluorescence signal and the signal representative of size and/or density distribution.

Many samples may contain a broad range of concentrations of species of interest - potentially spanning several orders of magnitude and often within the same sample. The processing unit 50 can be configured to automatically adjust light exposure time and/or detector parameters such as exposure time and detector gain, based on the signal intensity. The measured signal can be normalized according to the settings applied. This allows for a very broad dynamic range of the apparatus without the need for manual adjustment, advantageously of at least $10^5$.

Further, depending on the sample type being studied, it was found that the sensitivity offered by the fluorescence spectroscopy modality was often far superior to that achievable by the light scattering/absorbance detector assembly. As an example, for a sample of fluorescent latex beads the scattering detector was able to detect approximately a $10^{-4}$ % w/v concentration of material, while the fluorescent detector was capable of detecting concentrations of the order of $10^{-8}$ % w/v.

It has been observed that the scattering signal (as from part 30) can show a tendency for variable and unstable signal baselines, which can interfere particularly with analysis of highly dilute samples over extended measurement time frames. By incorporating fluorescence-based detection as described herein, this limitation can be overcome.

Hence, according to the present disclosure, a valuable method for determining the size and/or density distribution of various nanoparticle and microparticle suspensions is obtained. A suspension of particles may contain species whose combination of size and density produces similar settling behavior through the gradient, but which have other differentiating properties of interest. While the light scattering part 30 enables to record only a scattering signal, which correlates with the total amount of material present in the optical path of the detector at any given point, the fluorescence spectroscopy part 40 advantageously enables to discriminate additional chemical or biochemical properties of the sample mixture. The present disclosure can find application in a wide variety of real-world samples across a range of application areas, including but not limited to:

- heterogeneous particle suspensions which contain particles of varying chemical composition but similar physical properties;
- particles whose surfaces have been chemically modified as part of a synthetic process, and analysis is desired of the efficiency of the surface modification as a function of the particle size;
- particles of biological origin which may contain various combinations of biological entities, the identity of which may be of analytical value or carry diagnostic or therapeutic information;
- particles of biological origin which have been engineered to carry specific biological recognition/targeting molecules on their membrane, and/or which have been loaded with small drug molecules, a nanocarrier, etc.;
- determining the presence of key biomolecular markers present in biological nanoparticles (extracellular vesicles, viruses, etc.) for diagnostic or analytical purposes.

Present methods allow complex particle mixtures to be separated and analyzed simultaneously, while being tolerant to crude sample preparations containing a high degree of contaminants. It will be convenient to note that the particles can be solid or liquid.

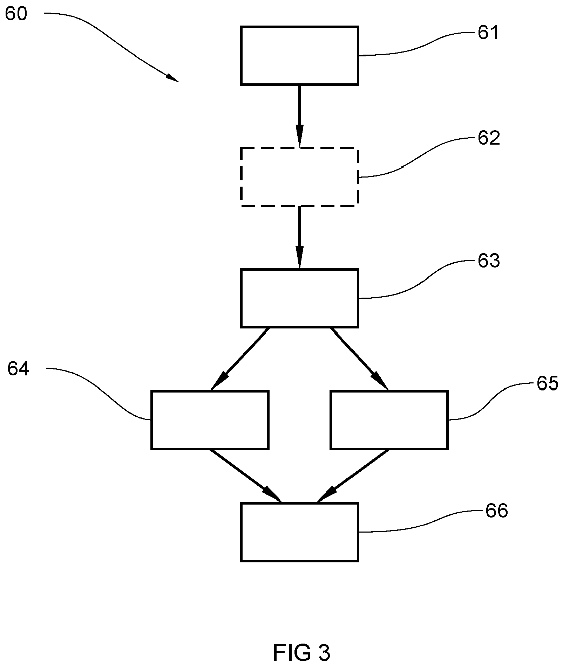

Referring to Fig. 3, a method 60 of characterizing a sample can comprise the following operations. In a first operation 61, a sample containing particles is prepared. The sample is typically a suspension and can comprise inorganic and/or organic particles in a size range typically between 10 nm and 40 $\mu$m, possibly between 20 nm and 30 $\mu$m and advantageously between 10 nm and 10 $\mu$m. The sample can alternatively be a suspension of biological particles, possibly in the same size range (10 nm - 10 $\mu$m), including molecules of biological origin, cells, extracellular vesicles, and/or viruses.

In an optional operation 62, a labeling protocol is applied to the sample. The particles of the sample can be marked with a fluorescent marker or dye. Different dyes may be used, which adhere to and/or react with different particles in the sample. This allows downstream differentiation of the sample during fluorescence measurements. Such a labeling protocol advantageously enables to simultaneously elucidate multiple biochemical signatures associated with a complex mixture of particles. This is useful in a number of highly relevant applications, including the fields of biochemical research, therapeutics and diagnostics. Other protocols for the biomolecular characterization of samples based on fluorescent labeling can be utilized in the present operation. Where analysis of a complex mixture of particulate components is desired, fractionation of the components prior to analysis and/or purification processes may be performed.

In operation 63, the sample is injected, e.g. at injection site 26 (Figs. 1A-1B), in a density gradient medium contained in disk chamber 25 of apparatus 10, while the disk is rotating. Under action of centrifugal forces, the particles of the sample will travel in a radial direction in distinct pace through the density gradient medium, based on their size and/or density. Particles of a same density and/or size will typically pass a defined radial position of the disk at a same instant of time.

In operation 64, which may be optional, the sample is illuminated at a first radial position in the disk chamber 25, with a light source. A signal is detected, as a function of time, representative of light scattered by the particles of the samples, due to illumination with the light source. Different detection mechanisms are known, e.g. the scattered light can be detected, or a light intensity of a light beam transmitted through the sample can be detected, and the light intensity is typically proportional to an amount of light that is scattered by the particles. As a result a signal representative of a size and/or density distribution of the sample is obtained.

It will be appreciated that, to correlate the above signal to an absolute size unit, a calibration in the density gradient medium may be performed prior to operation 63, e.g. by injecting one or more size calibration standards of known particle size and density. It will also be convenient to note that different types of disk centrifuges exist, and the particular type is not critical for the present disclosure. The disk centrifuge may be so configured that the sample travels radially from the rotation axis (centre) outwards towards the edge walls 24, or vice versa.

In operation 65, the sample is excited at a second radial position, which may or may not coincide with the first radial position, by one or more exciting light beams, configured to induce fluorescence. The wavelength of the exciting light beam is typically selected based on the nature of the fluorescence that can be obtained from the particles in the sample and/or from the fluorescent markers and/or dyes that are used, e.g. in operation 62. The fluorescence emitted by the sample is detected, as a function of time. As a result, a signal representative of a fluorescence signature of the sample is obtained.

In operation 66, the signal obtained in operation 65 and possibly the signal obtained in operation 64, are processed to obtain a measurement. Processing may involve various signal processing operations, such as averaging, filtering and normalizing to obtain a measurement of an intensity as a function of time, which can further be correlated to a particle size. Various intensity measurements, e.g. from different fluorescence sources (wavelengths) and/or from both light scattering and fluorescence sources can be combined, e.g. superimposed, to obtain a physical and (bio)chemical signature of the sample.

**Example 1: mixture of synthetic, fluorescently-labeled particles**

A sample consisting of a mixture of three synthetic fluorescently labelled latex nanoparticles, with a 200 nm nominal size was prepared as a colloidal suspension. The sample was injected in a gradient density medium provided in a disk centrifuge apparatus as shown in Figs. 1A-1B. The gradient density medium was a 2-8% sucrose gradient solution in water. The disk centrifuge apparatus was built from a disk centrifuge Model DC24000 (CPS Instruments, Inc., USA) which was supplemented with a fluorescence spectroscopy unit utilizing a Coherent Obis CellX laser engine generating four excitation wavelengths (405 nm, 488 nm, 561 nm and 638 nm) which were collimated into a single beam. The beam was focused on the disk chamber at a radial position of 47 mm from the axis of rotation of the disk. A detector assembly arranged at an angle of 65° relative to the disk face was mounted at the same side of the light engine, to detect the fluorescence emission. The detector assembly comprised a 75 mm focusing lens, and two beam splitters, a first one to split off the beam at 550 nm and a second one to split the remaining beam (exceeding 550 nm) at 630 nm. Three photodetector channels are used to capture the three beams separately (a first one at 500-550 nm, second one at 580-630 nm and third one at 660+ nm).

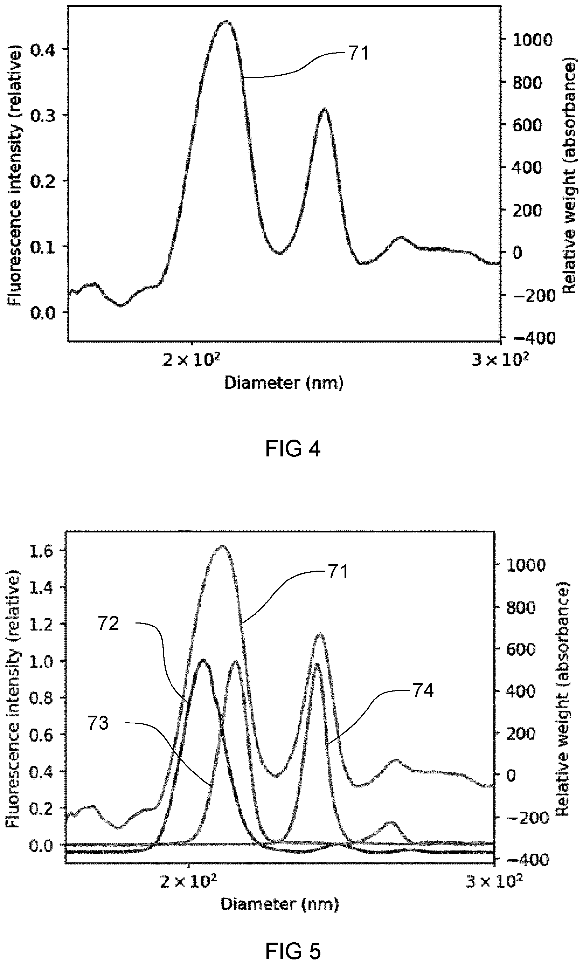

A scattering measurement was performed and the resulting signal 71 is shown in Fig. 4. This signal indicates the presence of two different species in the sample. The specific identity of the species cannot be determined easily however.

A fluorescence measurement was performed, and the resulting signal for each of the three detection wavelengths 72, 73, 74 is shown in Fig. 5 (respectively for the 488, 637 and 561 channels), superimposed on the scattering signal 71. From the fluorescence signal it is now possible to identify the specific fluorescently labeled species corresponding to features of the size distribution profile. Information is gained about the chemical identity of sample components beside just their physical size/density distribution. The large scattering peak is comprised of two different particle populations with different fluorescent properties and slightly different size modes. These two distributions were completely convoluted together in the scattering measurement. All three different nanoparticle species containing a distinct fluorescent label can be detected by means of well resolved peaks. Due to the more stable signal baseline and the separation of the readout into channels, we can identify in each channel a clear secondary peak corresponding to a population of particles larger than those in the primary peak. These were not possible to identify clearly from the scattering data alone.

**Example 2: Detection of biological nanoparticles via use of biomolecule-specific dyes**

Stocks of extracellular vesicles (EVs), derived from a cell culture of the human mono-mac-6 acute monocytic leukemia derived cell line were prepared. EVs were purified via ultracentrifugation followed by separation using a qEV size exclusion chromatography column (Izon Science). The EVs were divided into two sets, and on each set a staining protocol was performed in which the purified EVs were combined with either CellMask™ Orange (CMO) dye (ThermoFisher Scientific) or 5-(and-6)-Carboxyfluorescein Diacetate Succinimidyl Ester (CFDA-SE; ThermoFisher Scientific) dye. The CMO dye binds to the phospholipid membrane of the EVs. The CFDA-SE dye penetrates into the EV lumen, where it is processed by esterase enzymes present inside the lumen and generates a fluorescent product. The two stained sets were analyzed with the setup of Example 1. Fig. 6 plots results of scattering and fluorescence data obtained by analyzing the CMO dye stained sample. Fig. 7 plots results of scattering and fluorescence data obtained by analyzing the CDFA dye stained sample. Referring to Fig. 6, the CMO dye stained sample provides a fluorescence signal 83 at the 561 nm detector channel, while the fluorescence signals 82 of the 488 nm detector channel and 84 of the 637 nm detector channel do not give results. Referring to Fig. 7, fluorescence by the CFDA-SE stained sample was detected by the 488 nm detector channel 82, while channels 83 at 561 nm and 84 at 637 nm were not triggered. Together, these results confirm the identity of the observed population of ~200 nm particles as EVs, and allow these to be clearly discerned from the population of larger species present in the scattering data.

**Claims**

1. Method of characterizing a sample of particles, comprising:

    injecting the sample in a liquid contained in an internal chamber (25) of a disk (21) rotating about an axis (200) of rotation,

subjecting the particles of the sample to centrifugal separation in the liquid in the internal chamber,
illuminating the particles of the sample at a first radial position (253) with respect to the axis of rotation with a first light wavelength and collecting, in response to illuminating with the first light wavelength, first data representative of light scattering and/or light absorbance, as a function of time,
illuminating the particles of the sample at a second radial position (254) with respect to the axis of rotation with a second light wavelength thereby inducing fluorescence emission of at least a portion of the particles and collecting fluorescence data representative of the induced fluorescence emission, as a function of time,
determining a measurement representative of a property of the sample of particles based on the first data and the fluorescence data.

2. Method of claim 1, wherein the internal chamber (25) comprises a density gradient medium in which the particles in the sample separate.

3. Method of claim 1 or 2, wherein the fluorescence data is collected via the fluorescence emission intercepted by an optical assembly having an optical axis (454) arranged oblique or perpendicular relative to a plane perpendicular to the axis of rotation (200), preferably wherein the optical axis (454) has an angle ($\alpha$) relative to the plane perpendicular to the axis of rotation between 45° and 90°.

4. Method of any one of the preceding claims, comprising labelling at least a portion of the particles with a fluorescent marker or a dye prior to injecting the sample in the liquid, wherein the fluorescent marker or the dye produces directly or indirectly a fluorescent signal upon illuminating with the second light wavelength, preferably wherein the fluorescent marker or the dye reacts with the particles of the at least one portion to produce a fluorescent product, preferably comprising labelling different portions of particles of the sample with different fluorescent markers or dyes prior to injecting the sample in the liquid, wherein the different fluorescent markers or dyes produce directly or indirectly distinct fluorescent signals upon illuminating with the second light wavelength, preferably wherein the sample comprises biological particles.

5. Method of any one of the preceding claims, wherein the second light wavelength comprises multiple separate wavelengths, each inducing distinct fluorescence emission of at least a respective portion of the particles, and wherein the fluorescence data is collected in respect of each of the distinct fluorescence emissions.

6. Method of any one of the preceding claims, wherein the sample is illuminated with the second light wavelength through a light beam entering the internal chamber from a first face (22) of the disk, and wherein the fluorescence data is collected via a fluorescence emission detected at a side of the first face.

7. Method of any one of the preceding claims, wherein determining a measurement comprises superimposing the first data and the fluorescence data.

8. Apparatus (10) for characterizing a sample of particles, comprising:

a disk (21) rotatable about an axis (200) of rotation, the disk comprising an internal chamber (25) configured to contain a liquid, a transparent window on at least one face (22) of the disk and an injection site (26) for injecting the sample of particles into the liquid, such that the sample of particles is configured to separate via centrifugal separation in the liquid,
a first light source (31) configured to illuminate the particles of the sample with a first light wavelength at a first radial position (253) with respect to the axis of rotation and a corresponding first detector (33) configured to collect first data representative of light scattering and/or light absorbance in response to particles of the sample being illuminated with the first light wavelength,
a second light source (41) configured to illuminate the particles of the sample with a second light wavelength at a second radial position (254) with respect to the axis of rotation, and a corresponding second detector (45) configured to collect second data representative of fluorescence emission induced in at least a portion of the particles in the sample in response to the particles of the sample being illuminated with the second light wavelength,
a processing unit (50) coupled to the first detector and to the second detector and configured to determine a measurement representative of a property of the sample of particles based on the first data and the second data.

9. Apparatus of claim 8, wherein the second light source (41) comprises an optical assembly (42, 44) configured to illuminate the particles of the sample and the second detector (45) comprises an optical assembly (455, 456) configured to intercept the fluorescence emission, wherein the optical assemblies of the second light source and of the second detector are arranged at a same side of the disk.

10. Apparatus of claim 8 or 9, wherein the second detector (45) comprises an optical axis (454) configured to capture the fluorescence emission, wherein the optical axis (454) is arranged at an oblique angle compared to a plane perpendicular to the axis (200) of rotation, or the optical axis is arranged perpendicular to the plane.

11. Apparatus of any one of the claims 8 to 10, wherein the second light source (41) is configured to illuminate the particles of the sample with a plurality of second light wavelengths, the plurality of second light wavelengths being configured to induce fluorescence emission at a plurality of different wavelengths.

12. Apparatus of claim 11, wherein the second light source (41) comprises an optical assembly (42) configured to collimate light beams associated with the plurality of second light wavelengths.

13. Apparatus of claim 11, wherein the second light source comprises a plurality of light source modules (411-414), each being configured to generate light of a different light wavelength corresponding with a respective one of the plurality of second light wavelengths, and wherein the light source modules are configured to illuminate the sample at different angular positions (254, 255, 256, 257) about the axis (200) of rotation.

14. Apparatus of any one of the claims 8 to 13, wherein the second light source and the second detector are arranged in an epifluorescence configuration, preferably wherein an optical path of the second light source and an optical path of the second detector coincide along at least a portion of a length of the optical path of the second light source, preferably comprising a beam splitter configured to divert the optical paths of the second light source and of the second detector from one another, preferably comprising a focusing lens arranged in a coinciding portion of the optical paths of the second light source and the second detector.

15. Apparatus of any one of the claims 8 to 14, wherein the second detector is a multichannel detector configured to detect the fluorescence emission at a plurality of light wavelengths.

FIG 1A

FIG 1B

FIG 2

FIG 3

FIG 4

FIG 5

FIG 6

FIG 7

Europäisches
Patentamt

European
Patent Office

Office européen
des brevets

## EUROPEAN SEARCH REPORT

Application Number

EP 22 21 3752

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 865 305 A1 (TOSHIBA KK [JP]; SANKO JUNYAKU KK [JP]; EISAI R&D MAN CO LTD [JP]) 12 December 2007 (2007-12-12) | 1,4-9 | INV. G01N15/02 G01N15/04 |
| Y | * paragraphs [0006] - [0067]; figures 1-4B * | 2,3, 10-15 | |
| Y | EP 3 859 306 A1 (HORIBA LTD [JP]) 4 August 2021 (2021-08-04) * paragraph [0007]; figure 1 * | 2 | |
| Y | EP 0 823 633 A1 (KOMANNS ARIBERT [DE]) 11 February 1998 (1998-02-11) * column 6, lines 31-41; figure 1 * | 3,10 | |
| Y | US 2018/196246 A1 (BARES AMANDA J [US] ET AL) 12 July 2018 (2018-07-12) * paragraphs [0005], [0006]; figure 1 * | 11-15 | |

TECHNICAL FIELDS
SEARCHED        (IPC)

G01N

The present search report has been drawn up for all claims

| Place of search | Date of completion of the search | Examiner |
|---|---|---|
| The Hague | 19 June 2023 | Ionescu, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 3752

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2023

| Patent document cited in search report | | | Publication date | Patent family member(s) | | | Publication date |
|---|---|---|---|---|---|---|---|
| EP | 1865305 | A1 | 12-12-2007 | EP | 1865305 | A1 | 12-12-2007 |
| | | | | JP | WO2006106962 | A1 | 18-09-2008 |
| | | | | US | 2008003668 | A1 | 03-01-2008 |
| | | | | US | 2011180725 | A1 | 28-07-2011 |
| | | | | WO | 2006106962 | A1 | 12-10-2006 |
| EP | 3859306 | A1 | 04-08-2021 | EP | 3859306 | A1 | 04-08-2021 |
| | | | | JP | WO2020090775 | A1 | 24-09-2021 |
| | | | | US | 2021310925 | A1 | 07-10-2021 |
| | | | | WO | 2020090775 | A1 | 07-05-2020 |
| EP | 0823633 | A1 | 11-02-1998 | DE | 19631855 | A1 | 12-02-1998 |
| | | | | EP | 0823633 | A1 | 11-02-1998 |
| US | 2018196246 | A1 | 12-07-2018 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7294513 B2